# EUROPÄISCHE PATENTSCHRIFT

(11) **EP 3 815 044 B1**
(45) Veröffentlichungstag und Bekanntmachung des Hinweises auf die Patenterteilung: **16.08.2023**
(21) Anmeldenummer: 19724396.7
(22) Anmeldetag: 09.05.2019
(51) Int. Cl.: G06T 7/55, G06T 17/20, G06T 19/20, G06V 20/00

(54) **VERFAHREN ZU EINER SENSOR- UND SPEICHERBASIERTEN DARSTELLUNG EINER UMGEBUNG, ANZEIGEVORRICHTUNG UND FAHRZEUG MIT DER ANZEIGEVORRICHTUNG**
METHOD FOR SENSOR AND MEMORY-BASED DEPICTION OF AN ENVIRONMENT, DISPLAY APPARATUS AND VEHICLE HAVING THE DISPLAY APPARATUS
PROCÉDÉ DE REPRÉSENTATION D'UN ENVIRONNEMENT BASÉE SUR CAPTEUR ET MÉMOIRE, DISPOSITIF D'AFFICHAGE ET VÉHICULE ÉQUIPÉ D'UN TEL DISPOSITIF D'AFFICHAGE

(30) Priorität: 30.06.2018 DE 102018210812
(43) Veröffentlichungstag der Anmeldung: 05.05.2021
(73) Patentinhaber: Robert Bosch GmbH, 70442 Stuttgart (DE)
(72) Erfinder: HERZOG, Paul Robert, 31137 Hildesheim (DE); BROSCH, Uwe, 31141 Hildesheim (DE); TORRES LOPEZ, Lidia Rosario, 53225 Bonn (DE); RAPROEGER, Dirk, 31515 Wunstorf (DE); LAUER, Paul-Sebastian, 30175 Hannover (DE)
(86) Internationale Anmeldenummer: PCT/EP2019/061953
(87) Internationale Veröffentlichungsnummer: WO 2020/001838

(56) Entgegenhaltungen:
- DE-A1-102014 208 664
- DE-T2- 60 207 655
- US-A1- 2014 278 065
- US-B2- 9 013 286

## Beschreibung

Die vorliegende Erfindung betrifft ein Verfahren zu einer sensor- und speicherbasierten Darstellung einer Umgebung eines Fahrzeugs, eine Anzeigevorrichtung zur Durchführung des Verfahrens und das Fahrzeug mit der Anzeigevorrichtung.

### Stand der Technik

Die Schrift EP 1 462 762 A1 offenbart eine Umfelderfassungsvorrichtung für ein Fahrzeug.

Die Umfelderfassungsvorrichtung erzeugt ein virtuelles dreidimensionales Umgebungsmodell und zeigt dieses Modell an.

Die Schrift DE 10 2008 034 594 A1 betrifft ein Verfahren zur Information eines Insassen eines Fahrzeuges, wobei eine Darstellung einer Umgebung des Fahrzeugs generiert wird.

Das Dokument US 7,161,616 B1 offenbart eine Anzeige eines synthetischen Bilds von einer virtuellen Beobachterperspektive.

Relevanter Stand der Technik ist auch offenbart in US 2014/278065 A1, US 9 013 286 B2 und DE 602 07 655 T2.

Eine Kamera eines Fahrzeugs kann Umgebungsbereiche hinter Objekten in einer Umgebung eines Fahrzeugs nicht erfassen. Eine Darstellung einer rückwärtigen Ansicht eines mittels einer Kamera von vorne erfassten Fremdfahrzeugs für den Fahrer ist beispielsweise nicht möglich. Ein nur in Abhängigkeit erfasster Kamerabilder ermitteltes Umgebungsmodell, welches meist aus einer Perspektive von schräg oben dargestellt ist, zeigt demnach dem Fahrer die Umgebung typischerweise unvollständig an. Des Weiteren resultieren durch die bekannten Verfahren im Falle von hohen und naheliegenden Objekten unnatürliche Verzerrungen in einer angezeigten Darstellung der Umgebung.

Die Aufgabe der vorliegenden Erfindung ist es, die Darstellung einer Umgebung eines Fahrzeugs für einen Fahrer zu verbessern.

### Offenbarung der Erfindung

Die vorstehende Aufgabe wird durch die Merkmale der unabhängigen Ansprüche 1 und 9 gelöst.

Die vorliegende Erfindung betrifft ein Verfahren zu einer sensor- und speicherbasierten Darstellung einer Umgebung eines Fahrzeugs, wobei das Fahrzeug zumindest einen bildgebenden Sensor zur Erfassung der Umgebung aufweist. Der bildgebende Sensor weist bevorzugt eine Kamera auf. Das Verfahren weist eine Erfassung einer Abfolge von Bildern mittels des bildgebenden Sensors auf. Anschließend werden Abstandsdaten in Abhängigkeit der erfassten Bilder bestimmt, insbesondere eine zweidimensionale Tiefenkarte und/oder eine dreidimensionale Punktwolke. Alternativ oder zusätzlich können die Abstandsdaten, insbesondere die zweidimensionale Tiefenkarte und/oder die dreidimensionale Punktwolke, in Abhängigkeit von mittels mindestens eines Abstandssensors des Fahrzeugs erfasster Abstände zwischen Objekten in der Umgebung und dem Fahrzeug bestimmt werden. Der optionale Abstandssensor weist einen Ultraschall-, Radar- und/oder Lidarsensor auf. Die Abstandsdaten repräsentieren die erfassten und/oder ermittelten Abstände zwischen dem Fahrzeug und Objekten in der Umgebung des Fahrzeugs. Die Bestimmung von Abständen zum Fahrzeug beziehungsweise der Abstandsdaten mittels eines aktiven Abstandsensors, beispielsweise mittels des Lidarsensors und/oder mittels des Radarsensors und/oder mittels Ultraschallsensoren, weist gegenüber einer kamerabasierten Abstandsbestimmung den prinzipiellen Vorteil auf, dass Abstände auch bei schlechten Lichtverhältnissen und/oder schlechten Witterungsbedingungen zuverlässig erfasst werden. Es kann vorgesehen sein, dass eine Auswahl eines Sensortyps Kamera und/oder Ultraschallsensor und/oder Lidarsensor und/oder Radarsensor zur Bestimmung der Abstandsdaten in Abhängigkeit von Lichtverhältnissen und/oder Witterungsbedingungen und/oder einer Fahrzeuggeschwindigkeit durchgeführt wird. Anschließend wird in einem weiteren Verfahrensschritt eine dreidimensionale Struktur eines Umgebungsmodells in Abhängigkeit der bestimmten Abstandsdaten, insbesondere der Tiefenkarte und/oder der bestimmten Punktwolke, erzeugt. Die Struktur des Umgebungsmodells weist insbesondere ein dreidimensionales Gitternetz auf. Des Weiteren wird mindestens ein Objekt in der Umgebung des Fahrzeugs in Abhängigkeit der erfassten Bilder erkannt. Die Erkennung des Objektes erfolgt durch ein erstes neuronales Netz. Beispielsweise werden Fahrzeuge, Fußgänger, Infrastrukturobjekte, wie beispielsweise eine Ampel, und/oder Gebäude als Objekt erkannt. Optional wird zusätzlich eine Objektklasse des erkannten Objektes und/oder eine Objektgattung des erkannten Objektes durch das erste neuronale Netz ermittelt beziehungsweise erkannt. Es kann beispielsweise vorgesehen sein, dass eine Fahrzeugklasse eines Kleinwagens als Objektklasse und/oder ein Herstellermodell des Kleinwagens als Objektgattung erkannt wird. Danach wird ein synthetisches Objektmodell in Abhängigkeit des erkannten Objektes aus einem elektrischen Speicher geladen, wobei der Speicher beispielsweise innerhalb eines Steuergeräts des Fahrzeugs angeordnet ist. Optional erfolgt das Laden des Objektmodells zusätzlich in Abhängigkeit der erkannten Objektklasse und/oder der erkannten Objektgattung. Das synthetische Objektmodell kann ein spezifisches Objektmodell, welches das erkannte Objekt repräsentiert, oder ein generisches Objektmodell sein. Das generische Objektmodell ist parametrisierbar beziehungsweise wird in Abhängigkeit des erkannten Objektes und/oder der erkannten Objektklasse und/oder der erkannten Objektgattung und/oder in Abhängigkeit der Abstandsdaten verändert. Danach wird eine Anpassung der erzeugten dreidimensionalen Struktur des Umgebungsmodells in Abhängigkeit des geladenen synthetischen Objektmodells und der Abstandsdaten durchgeführt, wobei das synthetische Objektmodell einen Strukturbereich des erzeugten Umgebungsmodells ersetzt. Mit anderen Worten wird das erzeugte Umgebungsmodell durch die geladenen Objektmodelle in Abhängigkeit der erfassten und/oder ermittelten Abstände erweitert. Dieses um das synthetische Objektmodell angepasste Umgebungsmodell wird dem Fahrer angezeigt, wobei die Anzeige bevorzugt auf einem Display des Fahrzeugs und/oder auf einem Display eines mobilen elektronischen Gerätes erfolgt. Durch das Verfahren können vorteilhafterweise unnatürliche Verzerrungen in einer Ansicht des Umgebungsmodells reduziert werden, so dass das angezeigte Umgebungsmodell realistischer und fehlerfrei wirkt. Des Weiteren werden durch die Anpassung des Umgebungsmodells unter Verwendung von Objektmodellen aus dem Speicher für eine Kamera nicht einsehbare Bereiche in dem Umgebungsmodell realistisch dargestellt, beispielsweise eine nicht durch eine Kamera erfasste Ansicht eines Fremdfahrzeugs. Durch das Verfahren kann der Fahrer darüber hinaus eine Fahrsituation, ein Abstand zu einem Objekt oder eine Parklücke besser und schneller einschätzen, wodurch zusätzlich der Fahrkomfort für den Fahrer erhöht wird.

In einer bevorzugten Ausgestaltung wird eine Objektausrichtung des erkannten Objektes in Abhängigkeit der erfassten Bilder ermittelt, insbesondere erfolgt die Erkennung der Objektausrichtung durch ein zweites neuronales Netz und/oder durch eine andere Art künstlicher Intelligenz beziehungsweise eines anderen Klassifikationsverfahrens. In dieser Ausgestaltung erfolgt die Anpassung der erzeugten dreidimensionalen Struktur des Umgebungsmodells zusätzlich in Abhängigkeit der ermittelten Objektausrichtung. Dadurch erfolgt die Anpassung des erzeugten Umgebungsmodells vorteilhafterweise schneller und zuverlässiger.

In einer besonders bevorzugten Ausführung werden Segmente beziehungsweise Objektinstanzen in der Umgebung des Fahrzeugs in Abhängigkeit der erfassten Bilder erkannt. Die Erkennung der Segmente beziehungsweise Objektinstanzen erfolgt vorzugsweise mittels eines dritten neuronalen Netzes Netz und/oder durch eine andere Art künstlicher Intelligenz beziehungsweise eines anderen Klassifikationsverfahrens. Anschließend erfolgt eine Zuordnung der Abstände beziehungsweise Tiefeninformation in den Abstandsdaten zu dem erkannten Segment beziehungsweise der erkannten Objektinstanz. Die Anpassung der erzeugten dreidimensionalen Struktur des Umgebungsmodells erfolgt in dieser Ausführung zusätzlich in Abhängigkeit der erkannten Segmente beziehungsweise Objektinstanzen, insbesondere in Abhängigkeit der den Abständen zugeordneten Segmente beziehungsweise Objektinstanzen. Dadurch erfolgt die Anpassung der erzeugten dreidimensionalen Struktur des Umgebungsmodells in Abhängigkeit des geladenen synthetischen Objektmodells vorteilhafterweise genauer und schneller.

Es wird eine Textur für die angepasste dreidimensionale Struktur des Umgebungsmodells in Abhängigkeit der erfassten Bilder ermittelt, wobei die erfassten Bilder bevorzugt Kamerabilder sind. Anschließend erfolgt die Anzeige des angepassten Umgebungsmodells mit der ermittelten Textur. Beispielsweise wird eine Farbe eines Fahrzeugs in dem Umgebungsmodell ermittelt. Es kann vorgesehen sein, dass die ermittelte Textur erfasste Kamerabilder beziehungsweise perspektivisch veränderte Kamerabilder aufweist. Durch diese Weiterführung wird das Umgebungsmodell mit einer realistischen Bildgebung und/oder Farbgebung angezeigt, wodurch dem Fahrer eine leichte Orientierung ermöglicht wird. Es wird die Ermittlung der Textur für den durch das geladene Objektmodell angepassten Strukturbereich des Umgebungsmodells aus dem Speicher geladen beziehungsweise ermittelt, insbesondere in Abhängigkeit des erkannten Objektes beziehungsweise einer erkannten Objektklasse beziehungsweise einer erkannten Objektgattung. Beispielsweise wird die Textur eines Herstellermodells eines Fahrzeugs aus dem elektrischen Speicher geladen, wenn eine entsprechende Objektgattung erkannt worden ist. Durch diese Ausgestaltung wirkt das Umgebungsmodell für den Fahrer realistisch. Außerdem werden unnatürliche Verzerrungen in der Textur vermieden.

In einer bevorzugten Weiterführung erfolgt die Anzeige des angepassten Umgebungsmodells innerhalb eines vorgegebenen Bereichs um das Fahrzeug. Mit anderen Worten erfolgt eine Darstellung des Umgebungsmodells nur innerhalb eines Bereichs, welcher durch einen vorgegebenen Abstand um das Fahrzeug begrenzt ist. Der vorgegebene Abstand um das Fahrzeug ist vorzugsweise kleiner oder gleich 200 Meter, besonders bevorzugt 50 Meter, insbesondere kleiner oder gleich 10 Meter. Der vorgegebene Bereich wird beispielsweise durch eine Grundfläche des vorgegebenen Bereichs definiert, welche den vorgegebenen Abstand beziehungsweise den vorgegebenen Bereich repräsentiert. Ein Mittelpunkt der Grundfläche repräsentiert insbesondere einen Mittelpunkt des Fahrzeugs. Die Grundfläche kann eine beliebige Form aufweisen, vorzugsweise weist die Grundfläche eine quadratische, elliptische oder kreisrunde Form auf. Somit wird vorteilhafterweise der Rechenaufwand zur Erzeugung des Umgebungsmodells sowie der Rechenaufwand zur Anpassung des Umgebungsmodells reduziert. Des Weiteren wird vorteilhafterweise durch diese Weiterführung eine niedrige Quote an unnatürlichen Verzerrungen in der Textur des angezeigten Umgebungsmodells erreicht.

Es kann vorgesehen sein, dass eine Größe des vorgegebenen Bereichs und/oder eine Form des vorgegebenen Bereichs und/oder eine Beobachterperspektive des angezeigten Umgebungsmodells in Abhängigkeit einer Fahrzeuggeschwindigkeit und/oder eines Lenkwinkels des Fahrzeugs und/oder der Abstandsdaten beziehungsweise in Abhängigkeit eines erfassten Abstandes zu einem Objekt angepasst wird.

In einer weiteren Ausgestaltung der Erfindung wird wenigstens eine zumindest teilweise vertikal zu einer Grundfläche des vorgegebenen Bereichs angeordnete Projektionsfläche außerhalb des angepassten Umgebungsmodells angezeigt. Auf diese Projektionsfläche wird mindestens ein Teilbereich eines aktuell erfassten Bildes projiziert, insbesondere mindestens ein Teilbereich eines erfassten Kamerabildes. Die auf der angezeigten Projektionsfläche dargestellten Bilder repräsentieren eine Ansicht einer fernen Umgebung, das heißt eines Umgebungsbereichs, welcher außerhalb des angezeigten Umgebungsmodells und weiter als der vorgegebene Abstand, welcher den vorgegebenen Bereich begrenzt, von dem Fahrzeug entfernt liegt.

In einer weiteren Ausgestaltung erfolgt die Anzeige der Projektionsfläche in Abhängigkeit der Fahrzeuggeschwindigkeit und/oder des Lenkwinkels des Fahrzeugs und/oder der Abstandsdaten beziehungsweise in Abhängigkeit eines erfassten Abstandes zu einem Objekt. Dadurch wird vorteilhafterweise bei einem Einparkvorgang keine Fernsicht auf einer Projektionsfläche angezeigt und folglich der Rechenaufwand in dieser Fahrsituation minimiert. Alternativ oder zusätzlich kann eine Größe und/oder eine Form der Projektionsfläche in Abhängigkeit der Fahrzeuggeschwindigkeit und/oder des Lenkwinkels des Fahrzeugs und/oder der Abstandsdaten angepasst werden. Dadurch kann dem Fahrer vorteilhafterweise beispielsweise bei einer Fahrt mit einer höheren Geschwindigkeit ein enger Ausschnitt des nach vorne in Fahrtrichtung liegenden Umgebungsbereichs angezeigt werden, wodurch der Rechenaufwand in einer Fahrsituation mit erhöhter Geschwindigkeit minimiert und eine Aufmerksamkeit des Fahrers auf den in dieser Fahrsituation wesentlichen Bereich fokussiert wird.

Die Erfindung betrifft auch eine Anzeigevorrichtung mit einem Display, welche dazu eingerichtet ist, ein erfindungsgemäßes Verfahren durchzuführen. Die Anzeigevorrichtung weist vorzugsweise einen bildgebenden Sensor, insbesondere eine Kamera, und ein Steuergerät auf. Das Steuergerät ist dazu eingerichtet, das erfindungsgemäße Verfahren durchzuführen, das heißt die Bilder zu erfassen, das angezeigte Umgebungsmodell zu erzeugen und anzupassen sowie das Display zur Anzeige des angepassten Umgebungsmodells anzusteuern.

Die Erfindung betrifft auch ein Fahrzeug mit der Anzeigevorrichtung.

Weitere Vorteile ergeben sich aus der nachfolgenden Beschreibung von Ausführungsbeispielen mit Bezug zu den Figuren.
- Figur 1:: Fahrzeug
- Figur 2:: Steuergerät
- Figur 3:: Ablaufdiagramm eines erfindungsgemäßen Verfahrens
- Figur 4:: Bild mit erkannten Objekten
- Figur 5:: Erkannte Objektausrichtung in Abhängigkeit des Bildes aus Figur 4
- Figur 6:: Erkannte Segmente in Abhängigkeit des Bildes aus Figur 4
- Figur 7:: Beispiel eines angezeigten Umgebungsmodells
- Figur 8:: Grundfläche des vorgegebenen Bereichs zur Darstellung des Umgebungsmodells sowie Projektionsfläche

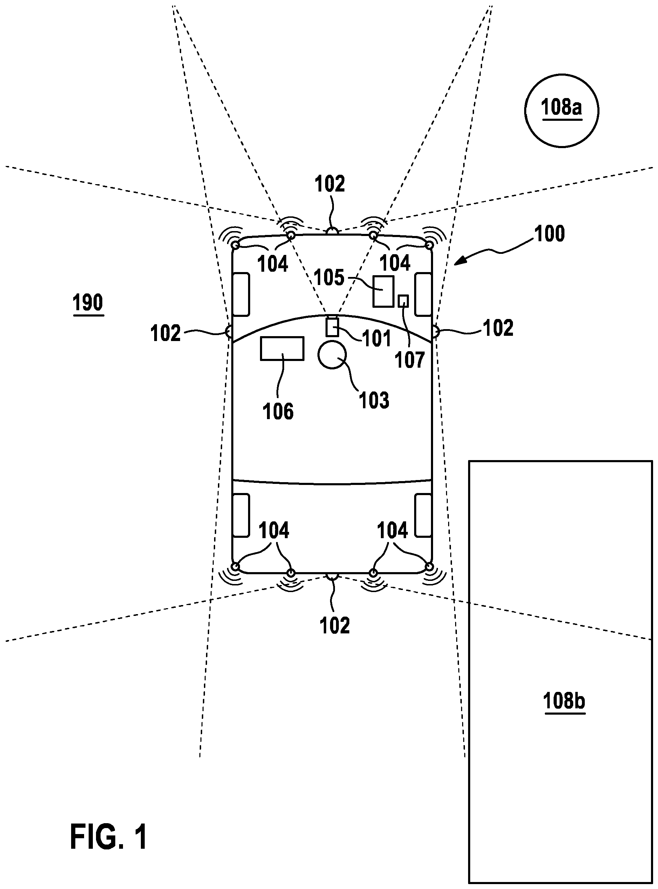

In Figur 1 ist ein Fahrzeug 100 in Aufsicht dargestellt. Das Fahrzeug 100 weist eine nach vorne gerichtete Kamera 101 als bildgebenden Sensor auf. Des Weiteren sind an dem Fahrzeug 100 als bildgebende Sensoren vorne, hinten sowie an jeder Seite des Fahrzeug Weitwinkelkameras 102 angeordnet, welche die Umgebung 190 des Fahrzeugs erfassen. Ferner weist das Fahrzeug 100 Abstandssensoren 103 und 104 auf, wobei die Abstandssensoren in diesem Ausführungsbeispiel ein Lidarsensor 103, welcher auch bildgebender Sensor sein kann, und mehrere Ultraschallsensoren 104 auf, welche auch bildgebende Sensoren sein können. Alternativ oder zusätzlich kann ein Radarsensoren am Fahrzeug angeordnet sein, welcher auch bildgebender Sensor sein kann. Der Lidarsensor 103 und die Ultraschallsensoren 104 sind dazu eingerichtet, Abstände zwischen dem Fahrzeug 100 und Objekten 108a und 108b in der Umgebung des Fahrzeugs 100 zu erfassen. Das Fahrzeug 100 weist darüber hinaus ein Steuergerät 105 auf, welches die mittels der Kamera erfassten Bilder und die mittels des Lidarsensors 103 und/oder der Ultraschallsensoren 104 erfassten Abstände erfasst. Das Steuergerät 105 ist ferner dazu eingerichtet, ein Display 106 im Fahrzeug 100 zur Anzeige einer visuellen Darstellung der Umgebung für den Fahrer anzusteuern, insbesondere zur Anzeige eines mittels des Steuergeräts erzeugten und angepassten Umgebungsmodells sowie gegebenenfalls von Projektionsflächen außerhalb des Umgebungsmodells. Das Steuergerät 105 lädt zur Berechnung des Umgebungsmodells Daten, insbesondere synthetische und/oder generische Objektmodelle, aus einem elektrischen Speicher 107 des Fahrzeugs 100 und/oder aus einem elektrischen Speicher des Steuergeräts 105.

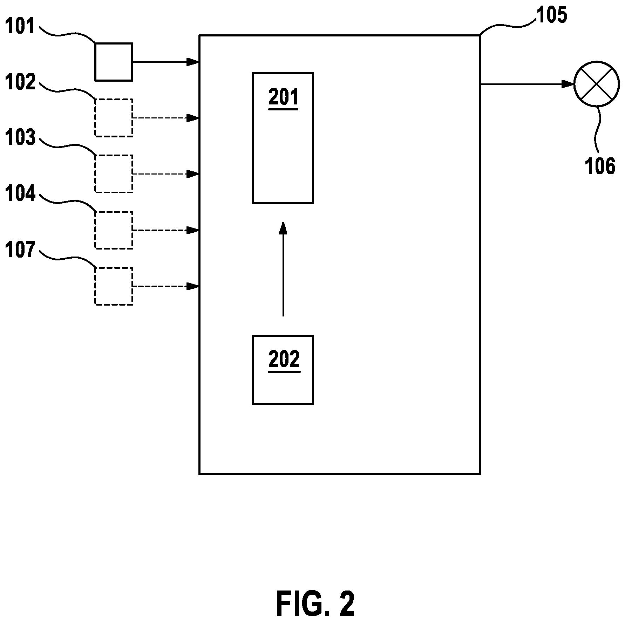

In Figur 2 ist das Steuergerät 105 als Blockschaltbild dargestellt. Das Steuergerät 105 erfasst mittels der Kamera 101 und/oder optional mittels mehrerer Weitwinkelkameras 102 und/oder mittels des Lidarsensors 103 zumindest eine Abfolge von Bildern. Ferner kann das Steuergerät 105 optional Abstände mittels des Lidarsensors 103 und/oder den Ultraschallsensoren 104 erfassen. Das Steuergerät 105 ist dazu eingerichtet, Daten aus dem externen Speicher 107 und/oder aus dem internen Speicher 202 des Steuergeräts zu laden. Eine Recheneinheit 201 des Steuergerät 105 berechnet in Abhängigkeit der erfassten Bilder und/oder der erfassten Abstände, welche in Abstandsdaten, insbesondere in einer bestimmten Tiefenkarte und/oder einer bestimmten Punktwolke, zusammengefasst sind, und/oder der Daten aus dem Speicher 107 und/oder 202 ein Umgebungsmodell. Darüber hinaus ist das Steuergerät 105 dazu eingerichtet, ein Display 106 zur Anzeige einer Darstellung der Umgebung des Fahrzeugs 100 anzusteuern, insbesondere ist die berechnete Darstellung das angepasste Umgebungsmodell, wobei die Anzeige um weitere Informationen, beispielsweise fahrdynamische Parameter, wie eine Fahrzeuggeschwindigkeit, und/oder eine Projektionsfläche ergänzt werden kann.

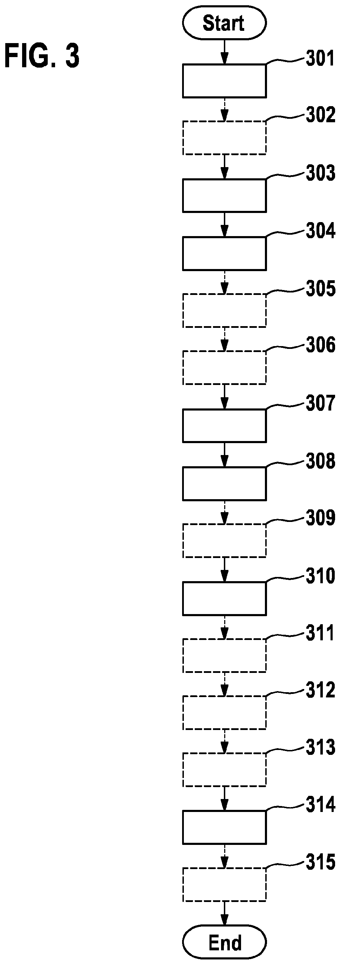

In Figur 3 ist beispielhaft ein Ablaufdiagramm eines erfindungsgemäßen Verfahrens als Blockschaltbild dargestellt. Das Verfahren beginnt mit einer Erfassung 301 einer Abfolge von Bildern mittels eines bildgebenden Sensors, insbesondere einer Kamera 101 und/oder 102. Optional werden in einem Schritt 302 Abstände zwischen dem Fahrzeug 100 und Objekten in der Umgebung des Fahrzeugs 100 mittels mindestens eines Abstandsensors 103 und/oder 104 erfasst. Anschließend werden in einem Schritt 303 Abstandsdaten, insbesondere eine zweidimensionale Tiefenkarte und/oder eine dreidimensionale Punktwolke, in Abhängigkeit der erfassten Bilder und/oder in Abhängigkeit der erfassten Abstände ermittelt. Die Abstandsdaten, insbesondere die Tiefenkarte und/oder die Punktwolke, umfassen die erfassten oder ermittelten Abstände des Fahrzeugs 100 zu Objekten 108a, 108b in der Umgebung des Fahrzeugs 100. Die Abstandsdaten werden beispielsweise in Abhängigkeit der erfassten Abfolge der Bilder ermittelt, insbesondere in Abhängigkeit einer Auswertung eines optischen Flusses zwischen erfassten Kamerabildern. Jeder Abstand der Abstandsdaten beziehungsweise jeder Punkt der Tiefenkarte und/oder der Punktwolke repräsentiert beispielsweise einen ermittelten Abstand zwischen dem Fahrzeug 100 und Objekten 108a, 108b in der Umgebung des Fahrzeugs 100. Es kann im Schritt 303 alternativ oder zusätzlich vorgesehen sein, dass die Abstandsdaten in Abhängigkeit mittels einer Stereokamera erfasster Bilder ermittelt wird. Alternativ werden die Abstandsdaten beziehungsweise die Tiefenkarte und/oder die Punktwolke im Schritt 303 in Abhängigkeit von voneinander unabhängigen Sensorsystemen 101, 102, 103 und/oder 104 bestimmt. Zusätzlich kann es vorgesehen sein, dass die Abstandsdaten beziehungsweise die Tiefenkarte und/oder die Punktwolke in Abhängigkeit eines zeitlichen Verlaufs von Daten eines Sensorsystems 101, 102, 103 und/oder 104 ermittelt wird. Zur Ermittlung der Abstandsdaten weisen Ultraschallsensoren 104 gegenüber einer Kamera 101, 102 beispielsweise als spezifischen Vorteil eine relative Unabhängigkeit der erfassten Abstände gegenüber schlechten Licht- und/oder Witterungsbedingungen auf. In einem Schritt 304 wird eine dreidimensionale Struktur eines Umgebungsmodells in Abhängigkeit der Abstandsdaten, insbesondere der Tiefenkarte und/oder der Punktwolke, erzeugt, insbesondere weist die dreidimensionale Struktur ein dreidimensionales Gitternetz auf, wobei das dreidimensionale Gitternetz bevorzugt die Abstandsdaten vereinfacht beziehungsweise repräsentiert. In einem optionalen Schritt 305 erfolgt eine Segmentierung der in einem Bild erfassten Umgebungsbereiche in Abhängigkeit einer Abfolge der erfassten Bilder. Beispielsweise werden ein Segment beziehungsweise eine Objektinstanz "Fahrbahn", ein Segment "Objekt", ein Segment "Gebäude" und/oder ein Segment "Infrastrukturobjekt" erkannt. Den Abständen beziehungsweise den Tiefeninformationen in den Abstandsdaten werden in einem optionalen Schritt 306 die erkannten Segmente beziehungsweise Objektinstanzen zugeordnet. In einem Schritt 307 wird mindestens ein Objekt in der Umgebung des Fahrzeugs in Abhängigkeit der erfassten Bilder erkannt. Diese Erkennung wird mit mindestens einem dafür trainierten ersten neuronalen Netz durchgeführt. In einem anschließenden Schritt 308 wird ein synthetisches Objektmodell in Abhängigkeit des erkannten Objektes aus dem Speicher 107 und/oder 202 geladen. In einem optionalen Schritt 309 erfolgt eine Ermittlung einer Objektausrichtung des erkannten Objektes in Abhängigkeit der erfassten Bilder, vorzugsweise durch ein zweites neuronales Netz. Die Objektausrichtung kann eine erste Näherung der Ausrichtung des Objektes repräsentieren, beispielsweise wird eine Kategorie einer relativen Ausrichtung des erkannten Objektes zum Fahrzeug aus einer Menge umfassend die Kategorien "Objektausrichtung nach vorne", "Objektausrichtung nach hinten", "Objektausrichtung nach rechts" und/oder "Objektausrichtung nach links" ermittelt. Danach erfolgt in einem weiteren Verfahrensschritt 310 eine Anpassung der erzeugten dreidimensionalen Struktur des Umgebungsmodells in Abhängigkeit des synthetischen Objektmodells und der Abstandsdaten, wobei das synthetische Objektmodell einen Strukturbereich des erzeugten Umgebungsmodells ersetzt beziehungsweise anpasst. Die Anpassung 310 der erzeugten dreidimensionalen Struktur des Umgebungsmodells kann vorzugsweise zusätzlich in Abhängigkeit der ermittelten Objektausrichtung erfolgen. In einem Schritt 311 erfolgt anschließend eine Ermittlung einer Textur für die angepasste dreidimensionale Struktur des Umgebungsmodells in Abhängigkeit der erfassten Bilder. Eine Ermittlung 311 der Textur für angepasste Strukturbereiche des Umgebungsmodells wird nicht durchgeführt, wenn in einem optionalen Schritt 312 eine Textur für diesen angepassten Strukturbereich aus dem Speicher geladen wird. In einem weiteren optionalen Schritt 313 wird eine Form eines vorgegebenen Bereichs, eine Größe des vorgegebenen Bereichs und/oder eine Anzeigeperspektive des angepassten Umgebungsmodells in Abhängigkeit einer Fahrzeuggeschwindigkeit, eines Lenkwinkels des Fahrzeugs, eines erfassten Abstandes zwischen dem Fahrzeug und einem Objekt und/oder den aktuellen Lichtverhältnissen und/oder den aktuellen Wetterbedingungen und/oder in Abhängigkeit des ausgewählten Sensortyps zur Erzeugung der Abstandsdaten angepasst, wobei der vorgegebenen Bereich beispielsweise durch eine Grundfläche repräsentiert wird. Anschließend erfolgt eine Anzeige 314 des angepassten Umgebungsmodells, wobei optional die ermittelte und/oder geladene Textur auf der dreidimensionalen Struktur des angepassten Umgebungsmodells angezeigt wird. Die Anzeige 314 des angepassten Umgebungsmodells erfolgt innerhalb des vorgegebenen Bereichs beziehungsweise der Grundfläche des vorgegebenen Bereichs um das Fahrzeug 100. In einem weiteren Schritt 315 kann es vorgesehen sein, eine zumindest teilweise vertikal zu einer Grundfläche des vorgegebenen Bereichs angeordnete Projektionsfläche außerhalb des angepassten Umgebungsmodells anzuzeigen, wobei auf diese Projektionsfläche mindestens ein Teilbereich eines erfassten Bildes projiziert wird, insbesondere eines Kamerabildes. Eine Größe und/oder eine Form der Projektionsfläche können optional in Abhängigkeit der Fahrzeuggeschwindigkeit, des Lenkwinkels und/oder der Abstandsdaten angepasst werden.

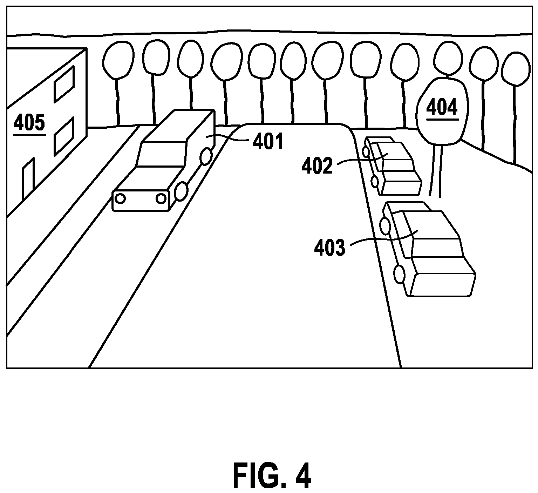

In Figur 4 ist als Bild ein erfasstes Kamerabild der nach vorne gerichteten Frontkamera 101 des Fahrzeugs mit den durch den Schritt 307 erkannten Objekten 401, 402, 403, 404 und 405 dargestellt. Die Objekte 401, 402, 403, 404 und 405 werden durch mindestens ein dafür trainiertes erstes neuronales Netz erkannt. Zu den erkannten Objekten kann jeweils eine Objektklassen erkannt beziehungsweise zugeordnet werden, beispielsweise Fahrzeug 401, 402 und 403, Gebäude 405 oder Baum 404.

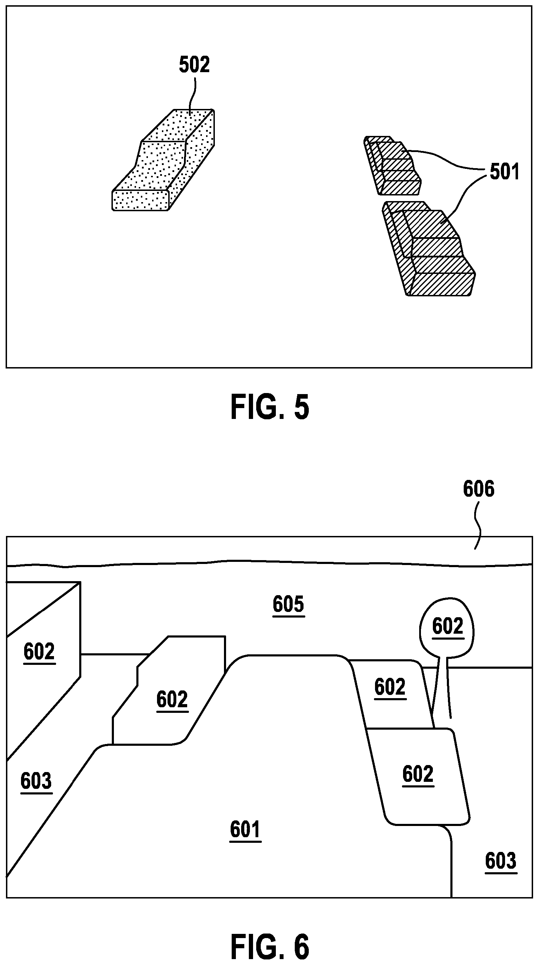

In Figur 5 sind die durch den Schritt 309 erkannte Objektausrichtungen 501 und 502 der erkannten Objekte 401, 402 und 403 in Abhängigkeit des in Figur 4 gezeigten Kamerabildes gestrichelt für die Kategorie 501 "Objektausrichtung nach vorne" und gepunktet für die Kategorie 502 "Objektausrichtung nach hinten" dargestellt, wobei die Objektausrichtungen 501 und 502 durch mindestens ein dafür trainiertes zweites neuronales Netz erkannt wurden.

In Figur 6 sind die durch den Schritt 305 in Abhängigkeit des in Figur 4 gezeigten Kamerabildes beziehungsweise einer Abfolge von Kamerabildern erkannten Segmente beziehungsweise Objektinstanzen 601, 602, 603, 605 und 606 dargestellt, wobei die Segmente 601, 602, 603, 605 und 606 durch mindestens ein dafür trainiertes drittes neuronales Netz erkannt wurden. Das Segment 601 repräsentiert beispielsweise einen für das Fahrzeug befahrbaren Bereich. Das Segment 602 repräsentiert einen Objektbereich und das Segment 603 repräsentiert einen nicht befahrbaren Bereich. Ein Grünflächenbereich wird durch das Segment 605 und ein Himmelbereich durch das Segment 606 repräsentiert. Das erste neuronale Netz und/oder das zweite neuronale Netz und/oder das dritte neuronale Netz können durch ein allgemeineres neuronales Netz beziehungsweise ein Erkennungsverfahren beziehungsweise Klassifizierungsverfahren beziehungsweise eine künstliche Intelligenz ersetzt werden, welches sowohl Objekte, Objektausrichtungen als auch Segemente erkennt.

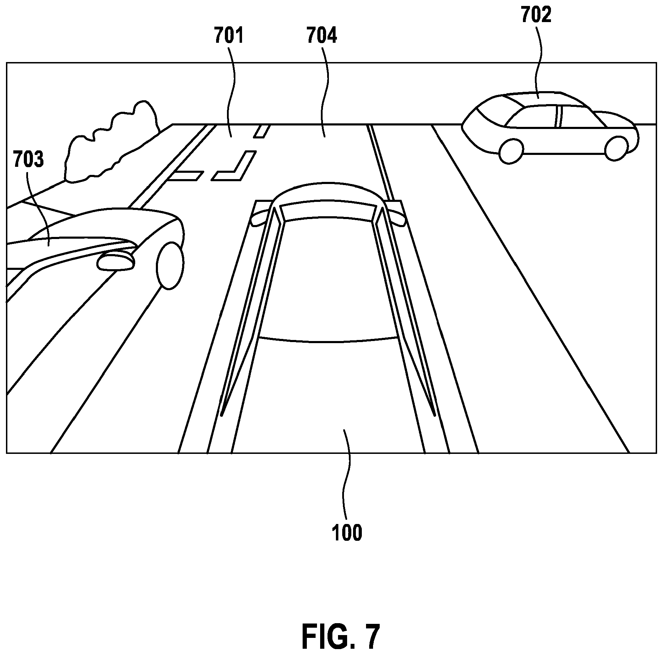

In Figur 7 ist ein angezeigtes Umgebungsmodell 701 dargestellt. Im Schritt 307 wurden Fahrzeuge als Objekte erkannt, wodurch das Umgebungsmodell jeweils durch ein Objektmodell 702 und 703 angepasst wurde. Mit anderen Worten wurden die Objektmodelle 702 und 703 in Abhängigkeit der erkannten Objekte, der erkannten Objektausrichtung und der erkannten Segmente in das Umgebungsmodell 701 eingesetzt bzw. das Umgebungsmodell durch die Objektmodelle 702 und 703 angepasst. Das Umgebungsmodell 701 weist demnach eine durch zwei Objektmodelle 702 und 703 angepasste Struktur auf. Das angepasste Umgebungsmodell 701 wird in Figur 7 nur innerhalb eines vorgegebenen quadratischen Bereichs 704 um einen Mittelpunkt des Fahrzeugs 705 angezeigt, wobei das Fahrzeug 100 auch als ein zusätzliches Objektmodell in das Umgebungsmodell 701 eingesetzt wurde.

Am Rand und außerhalb des angezeigten Umgebungsmodells 701 können zusätzliche Projektionsflächen 802 angeordnet sein. Auf diese Projektionsflächen 802 kann ein Teilbereich der erfassten Bilder, insbesondere erfasster Kamerabilder, angezeigt werden. Die auf den Projektionsflächen 802 angezeigten Teilbereiche der Bilder repräsentieren eine Fernsicht für einen Fahrer.

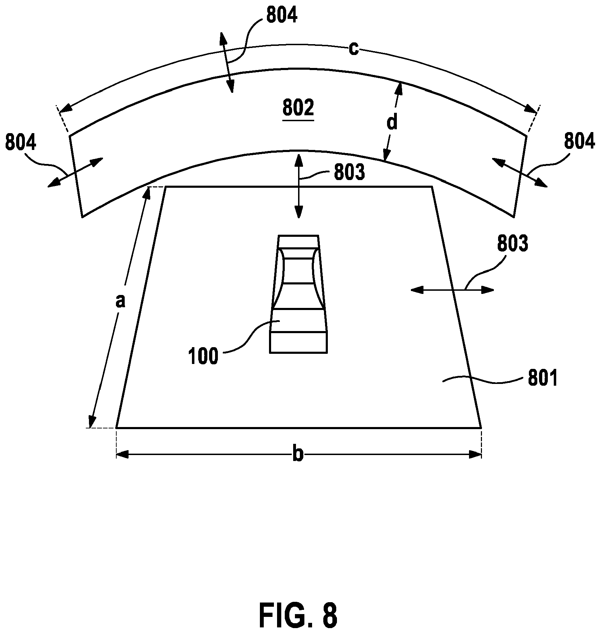

In Figur 8 ist ein Fahrzeug 100 mit einem um das Fahrzeug herum angeordneten vorgegebenen Bereich, welcher durch eine Grundfläche 801 des vorgegebenen Bereichs repräsentiert wird, und eine Projektionsfläche 802 dargestellt. In diesem Ausführungsbeispiel ist die Grundfläche 801 des vorgegebenen Bereichs perspektivisch dargestellt und quadratisch. Alternativ könnte die Form der Grundfläche auch elliptisch oder kreisförmig ausgeführt sein. Die Anzeige kann alternativ auch mit einer Perspektive senkrecht von oben oder schräg von der Seite erfolgen. Die Form der Grundfläche 801 des vorgegebenen Bereichs und/oder die Länge a und/oder die Breite b der Grundfläche 801 des vorgegebenen Bereichs werden beispielsweise in Abhängigkeit der Fahrzeuggeschwindigkeit und/oder der Witterungsverhältnisse und/oder der Sichtverhältnisse, beispielsweise einer Helligkeit beziehungsweise Tageszeit, angepasst. Die Anpassung der Länge a und/oder der Breite b der Grundfläche 801 des vorgegebenen Bereichs werden in Figur 8 durch die Pfeile 803 symbolisiert. Die Projektionsfläche 802 ist in diesem Ausführungsbeispiel gekrümmt und steht vertikal beziehungsweise senkrecht zu der Grundfläche 801 des vorgegebenen Bereichs. Alternativ kann die Projektionsfläche 802 als nicht gekrümmte Ebene an mindestens einer Seite der Grundfläche 801 des vorgegebenen Bereichs angeordnet sein, beispielsweise kann an jeder Seite der Grundfläche 801 eine Projektionsfläche 802 angeordnet sein. Des Weiteren kann die Projektionsfläche 802 in einem anderen Ausführungsbeispiel um 360° und geschlossen beziehungsweise als zylindrische Mantelfläche um die Grundfläche 801 beziehungsweise um den vorgegebenen Bereich herum angeordnet sein. Die Länge c und/oder die Höhe d der Projektionsfläche 802 werden beispielsweise in Abhängigkeit der Fahrzeuggeschwindigkeit angepasst. Die Anpassung der Länge c und/oder der Höhe d der Projektionsfläche 802 werden in Figur 8 durch die Pfeile 804 symbolisiert. Die Grundfläche 801 wird bevorzugt als Teil des Umgebungsmodells mit angezeigt, wobei die Grundfläche insbesondere in Abhängigkeit der erfassten Bilder und/oder der Abstandsdaten, insbesondere der Tiefenkarte und/oder der Punktwolke, ermittelt wird, so dass die Grundfläche 801 beispielsweise Unebenheiten einer Fahrbahn abbildet.

## Patentansprüche

1. Verfahren zu einer sensor- und speicherbasierten Darstellung einer Umgebung eines Fahrzeugs (100), wobei das Fahrzeug (100) zumindest einen bildgebenden Sensor zur Erfassung der Umgebung aufweist, insbesondere eine Kamera (101, 102), umfassend die folgenden Verfahrensschritte
• Erfassung (301) einer Abfolge von Bildern, insbesondere von Kamerabilden,
• Bestimmung (303) von Abstandsdaten in Abhängigkeit der erfassten Bilder und/oder eines Abstandssensors (103, 104) des Fahrzeugs (100), wobei die Abstandsdaten Abstände zwischen dem Fahrzeug und Objekten in der Umgebung des Fahrzeugs umfassen,
• Erzeugung (304) einer dreidimensionalen Struktur eines Umgebungsmodells (701) in Abhängigkeit der Abstandsdaten,
• Erkennung (307) von mindestens einem Objekt (108a, 108b, 401, 402, 403, 404, 405) in der Umgebung des Fahrzeugs (100) in Abhängigkeit der erfassten Bilder durch ein erstes neuronales Netz,
• Laden (308) eines synthetischen Objektmodells (702, 703) in Abhängigkeit des erkannten Objektes (108a, 108b, 401, 402, 403, 404, 405),
• Anpassung (310) der erzeugten dreidimensionalen Struktur des Umgebungsmodells (701) in Abhängigkeit des synthetischen Objektmodells (702, 703) und in Abhängigkeit der Abstandsdaten, wobei das synthetische Objektmodell einen Strukturbereich des erzeugten Umgebungsmodells ersetzt,
• Ermittlung (311) einer Textur für die angepasste dreidimensionale Struktur des Umgebungsmodells (701) in Abhängigkeit der erfassten Bilder, wobei die Textur für den durch das geladene Objektmodell angepassten Strukturbereich des Umgebungsmodells aus dem Speicher in Abhängigkeit des erkannten Objektes geladen wird, und
• Anzeige (314) des angepassten Umgebungsmodells (701) mit der ermittelten Textur.

2. Verfahren nach Anspruch 1, **dadurch gekennzeichnet, dass** die folgenden Schritte durchgeführt werden
• Ermittlung (309) einer Objektausrichtung (501, 502) des erkannten Objektes (108a, 108b, 401, 402, 403, 404, 405) in Abhängigkeit der erfassten Bilder, insbesondere durch ein neuronales Netz, und
• Anpassung (310) der erzeugten dreidimensionalen Struktur des Umgebungsmodells (701) zusätzlich in Abhängigkeit der ermittelten Objektausrichtung (501, 502).

3. Verfahren nach einem der vorhergehenden Ansprüche, **dadurch gekennzeichnet, dass** die folgenden Schritte durchgeführt werden
• Erkennung (305) von einer Objektinstanz (601, 602, 603, 605, 606) in der Umgebung des Fahrzeugs in Abhängigkeit der erfassten Bilder, insbesondere durch ein neuronales Netz,
• Zuordnung (306) der Abstände in den Abstandsdaten zu einer erkannten Objektinstanz (601, 602, 603, 605, 606), und
• Anpassung (310) der erzeugten dreidimensionalen Struktur des Umgebungsmodells (701) zusätzlich in Abhängigkeit der in den Abstandsdaten zugeordneten Objektinstanz (601, 602, 603, 605, 606).

4. Verfahren nach einem der vorhergehenden Ansprüche, **dadurch gekennzeichnet, dass** die Anzeige (314) des angepassten Umgebungsmodells (701) innerhalb eines vorgegebenen Bereichs um das Fahrzeug (100) erfolgt.

5. Verfahren nach Anspruch 4, **dadurch gekennzeichnet, dass** eine Größe des vorgegebenen Bereichs und/oder eine Form des vorgegebenen Bereichs und/oder eine Anzeigeperspektive des angepassten Umgebungsmodells (701) in Abhängigkeit einer Fahrzeuggeschwindigkeit und/oder der Abstandsdaten angepasst wird.

6. Verfahren nach einem der Ansprüche 4 oder 5, **dadurch gekennzeichnet, dass** folgender Verfahrensschritt durchgeführt wird
• Anzeige einer zumindest teilweise senkrecht zu einer Grundfläche (801) des vorgegebenen Bereichs angeordneten Projektionsfläche (802) außerhalb des angepassten Umgebungsmodells (701), wobei auf die Projektionsfläche (802) mindestens ein Teilbereich eines erfassten Bildes projiziert wird, insbesondere eines Kamerabildes.

7. Verfahren nach Anspruch 6, **dadurch gekennzeichnet, dass** die Anzeige der Projektionsfläche (802) in Abhängigkeit einer Fahrzeuggeschwindigkeit und/oder der Abstandsdaten erfolgt.

8. Anzeigevorrichtung, wobei die Anzeigevorrichtung dazu eingerichtet ist, ein Verfahren nach einem der Ansprüche 1 bis 7 durchzuführen.

9. Fahrzeug mit einer Anzeigevorrichtung nach Anspruch 8.

## Claims

1. Method for a sensor-based and memory-based representation of a surround of a vehicle (100), the vehicle (100) having at least one imaging sensor, more particularly a camera (101, 102), for capturing the surround, comprising the following method steps:
• capturing (301) a sequence of images, in particular camera images,
• determining (303) distance data on the basis of the captured images and/or a distance sensor (103, 104) of the vehicle (100), the distance data comprising distances between the vehicle and objects in the surround of the vehicle,
• generating (304) a three-dimensional structure of a surround model (701) on the basis of the distance data,
• recognizing (307), by way of a first neural network, at least one object (108a, 108b, 401, 402, 403, 404, 405) in the surround of the vehicle (100) on the basis of the captured images,
• loading (308) a synthetic object model (702, 703) on the basis of the recognized object (108a, 108b, 401, 402, 403, 404, 405),
• adapting (310) the generated three-dimensional structure of the surround model (701) on the basis of the synthetic object model (702, 703) and on the basis of the distance data, the synthetic object model replacing a structure region of the generated surround model,
• ascertaining (311) a texture for the adapted three-dimensional structure of the surround model (701) on the basis of the captured images, with the texture for the structure region of the surround model adapted by the loaded object model being loaded from the memory on the basis of the recognized object, and
• displaying (314) the adapted surround model (701) with the ascertained texture.

2. Method according to Claim 1, **characterized in that** the following steps are carried out:
• ascertaining (309), in particular by way of a neural network, an object alignment (501, 502) of the recognized object (108a, 108b, 401, 402, 403, 404, 405) on the basis of the captured images, and
• additionally adapting (310) the generated three-dimensional structure of the surround model (701) on the basis of the ascertained object alignment (501, 502).

3. Method according to either of the preceding claims, **characterized in that** the following steps are carried out:
• recognizing (305), in particular by way of a neural network, an object entity (601, 602, 603, 605, 606) in the surround of the vehicle on the basis of the captured images,
• assigning (306) the distances in the distance data to a recognized object entity (601, 602, 603, 605, 606), and
• additionally adapting (310) the generated three-dimensional structure of the surround model (701) on the basis of the object entity (601, 602, 603, 605, 606) assigned in the distance data.

4. Method according to any one of the preceding claims, **characterized in that** the adapted surround model (701) is displayed (314) within a predetermined region around the vehicle (100).

5. Method according to Claim 4, **characterized in that** a size of the predetermined region and/or a shape of the predetermined region and/or a display perspective of the adapted surround model (701) is adapted on the basis of a vehicle speed and/or the distance data.

6. Method according to either of Claims 4 and 5, **characterized in that** the following method step is carried out:
• displaying a projection surface (802), which is arranged at least partially perpendicular to a footprint (801) of the predetermined region, outside of the adapted surround model (701), with at least a partial region of a captured image, in particular of a camera image, being projected onto the projection surface (802).

7. Method according to Claim 6, **characterized in that** the projection surface (802) is displayed on the basis of a vehicle speed and/or the distance data.

8. Display apparatus, wherein the display apparatus is configured to carry out a method according to any one of Claims 1 to 7.

9. Vehicle having a display apparatus according to Claim 8.

## Revendications

1. Procédé pour une représentation à base de capteur et de mémoire d'un environnement d'un véhicule (100), le véhicule (100) possédant au moins un capteur d'imagerie destiné à acquérir l'environnement, notamment une caméra (101, 102), comprenant les étapes de procédé suivantes :
* acquisition (301) d'une séquence d'images, notamment d'images de caméra,
* détermination (303) de données de distance en fonction des images acquises et/ou d'un capteur de distance (103, 104) du véhicule (100), les données de distance comprenant des distances entre le véhicule et des objets dans l'environnement du véhicule,
* génération (304) d'une structure tridimensionnelle d'un modèle d'environnement (701) en fonction des données de distance,
* reconnaissance (307) d'au moins un objet (108a, 108b, 401, 402, 403, 404, 405) dans l'environnement du véhicule (100) en fonction des images acquises par un premier réseau neuronal,
* chargement (308) d'un modèle d'objet (702, 703) synthétique en fonction de l'objet (108a, 108b, 401, 402, 403, 404, 405) reconnu,
* adaptation de la structure tridimensionnelle générée du modèle d'environnement (701) en fonction du modèle d'objet (702, 703) synthétique et en fonction des données de distance, le modèle d'objet synthétique remplaçant une zone de structure du modèle d'environnement généré,
* identification (311) d'une texture pour la structure tridimensionnelle adaptée du modèle d'environnement (701) en fonction des images acquises, la texture pour la zone de structure du modèle d'environnement adaptée par le modèle d'objet chargé étant chargée à partir de la mémoire en fonction de l'objet reconnu, et
* affichage (314) du modèle d'environnement (701) adapté, avec la texture identifiée.

2. Procédé selon la revendication 1, **caractérisé en ce que** les étapes suivantes sont exécutées
* identification (309) d'une orientation d'objet (501, 502) de l'objet (108a, 108b, 401, 402, 403, 404, 405) reconnu en fonction des images acquises, notamment par un réseau neuronal, et
* adaptation (310) de la structure tridimensionnelle générée du modèle d'environnement (701) en plus en fonction de l'orientation d'objet (501, 502) identifiée.

3. Procédé selon l'une des revendications suivantes, **caractérisé en ce que** les étapes suivantes sont exécutées
* reconnaissance (305) d'une instance d'objet (601, 602, 603, 605, 606) dans l'environnement du véhicule en fonction des images acquises, notamment par un réseau neuronal,
* affectation (306) des distances dans les données de distance à une instance d'objet (601, 602, 603, 605, 606) reconnue, et
* adaptation (310) de la structure tridimensionnelle générée du modèle d'environnement (701) en plus en fonction de l'instance d'objet (601, 602, 603, 605, 606) affectée dans les données de distance.

4. Procédé selon l'une des revendications suivantes, **caractérisé en ce que** l'affichage (314) du modèle d'environnement (701) adapté s'effectue au sein d'une zone prédéfinie autour du véhicule (100).

5. Procédé selon la revendication 4, **caractérisé en ce qu'**une taille de la zone prédéfinie et/ou une forme de la zone prédéfinie et/ou une perspective d'affichage du modèle d'environnement (701) adapté est adaptée en fonction d'une vitesse du véhicule et/ou des données de distance.

6. Procédé selon l'une des revendications 4 ou 5, **caractérisé en ce que** l'étape suivante est exécutée
* affichage d'une surface de projection (802), disposée au moins partiellement perpendiculairement à une surface de base (801) de la zone prédéfinie, à l'extérieur du modèle d'environnement (701) adapté, au moins une zone partielle d'une image acquise étant projetée sur la surface de projection (802), notamment une image de caméra.

7. Procédé selon la revendication 6, **caractérisé en ce que** l'affichage de la surface de projection (802) s'effectue en fonction d'une vitesse du véhicule et/ou des données de distance.

8. Dispositif d'affichage, le dispositif d'affichage étant conçu pour mettre en œuvre un procédé selon l'une des revendications 1 à 7.

9. Véhicule équipé d'un dispositif d'affichage selon la revendication 8.
